## Europäisches Patentamt
## European Patent Office
## Office européen des brevets

(19)

(11) Numéro de publication: **0 140 780**
**B1**

(12) # FASCICULE DE BREVET EUROPÉEN

(45) Date de publication du fascicule du brevet:
04.01.89

(51) Int. Cl.⁴: **G 01 B 7/12,** G 01 B 7/16, G 01 B 5/12

(21) Numéro de dépôt: 84402095.8

(22) Date de dépôt: 18.10.84

(54) Sonde pour la mesure du diamètre interne d'un tube et dispositif d'introduction de cette sonde dans le tube.

(30) Priorité: 19.10.83 FR 8316632

(43) Date de publication de la demande:
08.05.85 Bulletin 85/19

(45) Mention de la délivrance du brevet:
04.01.89 Bulletin 89/1

(84) Etats contractants désignés:
CH DE GB LI NL

(56) Documents cité:
EP-A-0 105 979
DE-A-3 032 424
FR-A-2 235 351
FR-A-2 314 478
GB-A-1 246 961
NL-A-7 013 025
US-A-4 109 386

(73) Titulaire: **COMMISSARIAT A L'ENERGIE ATOMIQUE, 31/33, rue de la Fédération, F-75015 Paris (FR)**

(72) Inventeur: **Lorin, Christian, Les Balcons d'Entremont Avenue Alfred Capus, F-13100 Aix en Provence (FR)**
Inventeur: **Voituriez, Bernard, 4, Avenue Albert 1er de Belgique, F-38000 Grenoble (FR)**

(74) Mandataire: **Mongrédien, André, c/o BREVATOME 25, rue de Ponthieu, F-75008 Paris (FR)**

EP 0 140 780 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention se rapporte au domaine de la métrologie d'un alésage ou de la mesure du diamètre interne d'un tube à l'aide d'une sonde de petites dimensions qui permet d'explorer de façon précise l'intérieur d'un tube de grande longueur comportant éventuellement des coudes.

Les capteurs utilisés à l'heure actuelle pour étudier l'intérieur d'un tube droit ou coudé relèvent plus du contrôle de santé que d'une véritable mesure dimensionnelle précise. Les techniques les plus utilisées sont les ultrasons, qui nécessitent un liquide pour leur propagation, et les dispositifs à courants de Foucault qui sont sensibles à la température comme les dispositifs à ultra-sons. Il existe encore des capteurs à base de céramiques piézo-résistives pour le contrôle dimensionnel des soudures internes des tubes des générateurs de vapeur, mais ces capteurs sont fragiles et limités aux basses températures.

Le document DE-A-3 032 424 décrit une sonde pour le contrôle du diamètre interne d'un tube comprenant des moyens de centrage de la sonde à l'intérieur du tube, des moyens pour mesurer le diamètre intérieur du tube, et des moyens pour déterminer la position de la sonde à l'intérieur du tube.

Le document FR-A-2 235 351 décrit un dispositif pour mesurer en continu les dimensions internes d'un corps creux comprenant d'une lame flexible terminée par un patin, tandis qu'un autre patin diamétralement opposé au premier est fixe par rapport au corps de sonde.

La présente invention a justement pour but de remédier aux inconvénients mentionnés ci-dessus en proposant une sonde pour la mesure du diamètre interne d'un tube capable de mesurer et d'enregistrer simultanément:

- le diamètre intérieur et l'ovalisation dans une section droite donnée du tube sur 360° ou une mesure de diamètre axiale suivant une génératrice ou deux génératrices opposées,
- l'angle que fait le plan passant par le diamètre de mesure avec les plans horizontal et vertical,
- la température à l'endroit de la mesure, et
- l'endroit exact du point de mesure le long de l'axe du tube.

La sonde objet de l'invention comprend, de manière connue:

- des moyens de centrage de la sonde à l'intérieur du tube,
- des moyens pour mesurer le diamètre intérieur du tube, et
- des moyens pour déterminer la position de la sonde à l'intérieur du tube.

Selon l'invention, lesdits moyens de centrage comprennent un corps de sonde tandis que lesdits moyens pour déterminer la position de la sonde à l'intérieur du tube servent à déterminer la position angulaire de celle-ci et comprennent:

- une lame flexible dont une extrémité est encastrée dans le corps de sonde,
- une masselotte fixée à l'autre extrémité de ladite lame, qui est libre, et
- au moins un capteur à jauge de contrainte fixé sur ladite lame flexible.

Dans un premier mode de réalisation, le corps de sonde est de forme sensiblement ovoïde de révolution, l'intérieur de ce corps de sonde étant creux, et lesdits moyens de centrage comprennent en outre:

- un premier groupe de deux billes placées dans des logements ménagés dans la paroi du corps de sonde et sollicitées vers l'extérieur par une lame flexible, les deux billes étant placées suivant une génératrice du corps de sonde, et
- un deuxième groupe de deux billes identique au premier, disposé suivant la génératrice opposée du corps de sonde et au même niveau que le premier groupe.

Dans un deuxième mode de réalisation, le corps de sonde est de forme sensiblement ovoïde de révolution, l'intérieur de ce corps de sonde étant creux, et lesdits moyens de centrage comprennent en outre:

- un premier groupe de trois centreurs, formés de fils élastiques placés dans des logements ménagés dans la paroi du corps de sonde et disposés suivant trois génératrice de celui-ci décalées de 120° les unes par rapport aux autres, chacun desdits centreurs ayant une première extrémité fixée au corps de sonde et une deuxième extrémité libre pouvant venir en contact avec la paroi interne du tube, les points de contact des trois centreurs avec la paroi interne du tube étant situés dans un même plan transversal de celui-ci, et
- un deuxième groupe de trois centreurs formés de fils élastiques placés dans des logements ménagés dans le corps de sonde et disposés suivant trois génératrices de celui-ci décalées de 120° les unes par rapport aux autres, chacun desdits centreurs ayant une première extrémité fixée au corps de sonde et une deuxième extrémité libre et pouvant venir en contact avec la paroi interne du tube, les points de contact des trois centreurs du deuxième groupe avec la paroi interne du tube étant situés dans un même plan transversal de celui-ci différent du plan transversal contenant les points de contact des centreurs du premier groupe avec la paroi interne du tube.

Selon une autre caractéristique de l'invention, lesdits moyens permettant de mesurer le diamètre intérieur du tube comprennent:

- une lame flexible rendue solidaire du corps de sonde et ayant sensiblement la forme d'un V dont les deux branches sont symétriques par rapport à un plan contenant l'axe du tube lorsque la sonde se trouve à l'intérieur de celui-ci,
- une bille fixée à l'extrémité de chacune des branches de manière à être appliquée contre la paroi interne du tube du fait de l'élasticité de ladite lame flexible, et
- au moins une jauge de contrainte placée sur l'une des branches de la lame.

Dans ce cas, la sonde peut comporter une ogive avant de protection reliée au corps de sonde. L'ensemble constitué par la masselotte et la lame flexible se trouve à l'intérieur de l'espace délimité par l'ogive avant.

L'invention a également pour objet un dispositif pour l'introduction de cette sonde à l'intérieur d'un tube. Selon la principale caractéristique de ce dispositif, celui-ci comprend une gaine rigide ayant la forme d'un tube ondulé et contenant:

- un câble tressé disposé à l'intérieur de ladite gaine sensiblement suivant son axe, et
- une gaine à spires jointives disposée à l'intérieur de ladite gaine ondulée, cette gaine à spires jointives étant colinéaire à la gaine ondulée et au câble tressé.

Avantageusement, ce dispositif peut comporter en outre un double cardan permettant de relier l'ensemble constitué par la gaine ondulée, le câble tressé et la gaine à spires jointives au corps de sonde par l'intermédiaire d'une ogive arrière.

L'invention apparaîtra mieux à la lecture de la description qui va suivre, donnée à titre d'exemple purement illustratif et nullement limitatif, en référence aux dessins annexés dans lesquels:

- la figure 1 est une vue schématique en coupe horizontale d'une sonde conforme à l'invention, placée à l'intérieur d'un tube,
- la figure 2 est une vue schématique en coupe verticale de la sonde illustrée à la figure 1,
- la figure 3 est une vue schématique en coupe transversale du dispositif d'introduction de la sonde dans le tube,
- la figure 4 est une vue schématique en coupe longitudinale du dispositif d'introduction de la figure 3,
- la figure 5 est une vue semblable à la figure 2 illustrant un autre mode de réalisation des moyens de centrage de la sonde à l'intérieur du tube, et
- la figure 6 est une vue en coupe suivant la ligne VI-VI de la figure 5.

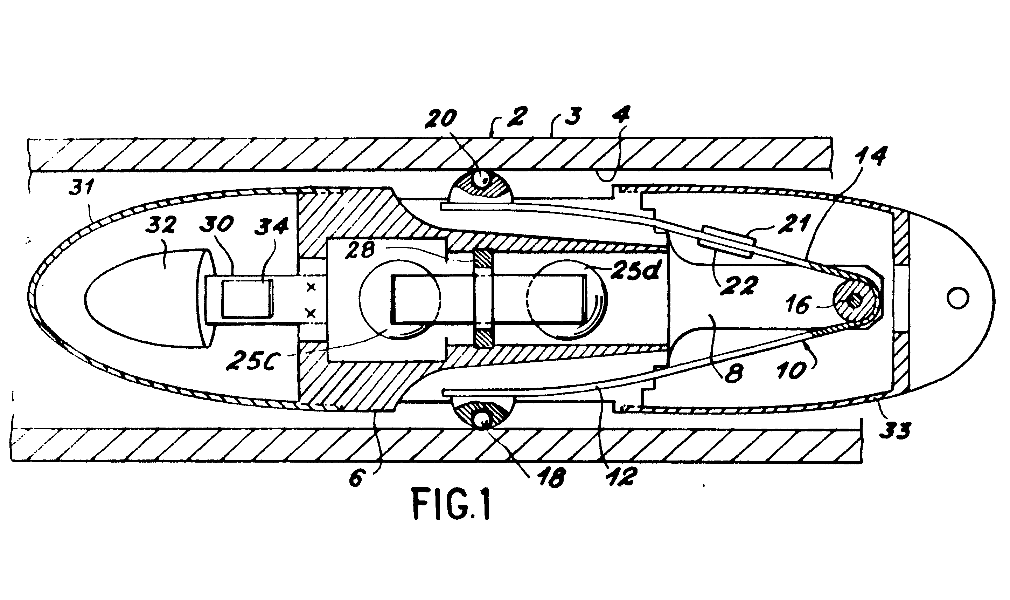

La figure 1 est une vue en coupe dans un plan horizontal passant par l'axe longitudinal d'un tube 2 dont les parois déterminent une face externe 3 et une face interne 4. On voit sur la figure que la sonde objet de l'invention se compose essentiellement d'un corps de sonde 6 prolongé vers l'arrière par un support ou une chape 8 sur lequel sont montés les moyens de mesure du diamètre intérieur du tube.

Ceux-ci se composent d'une lame flexible 10 ayant la forme d'un V dont les deux branches portent les références 12 et 14 sur la figure. Le sommet du V est fixé et articulé sur un axe 16 tandis que les extrémités des branches 12 et 14 opposées à l'axe 16 portent des billes 18 et 20 respectivement. L'élasticité de la lame flexible 10 fait que les branches 12 et 14 s'écartent l'une de l'autre en appliquant les billes 18 et 20 sur la face interne du tube. Deux jauges de contrainte 21 et 22 placées sur les deux faces de la branche 14 permettent de mesurer la contrainte en flexion de cette lame, contrainte qui est inversement proportionnelle au diamètre intérieur du tube. Ce montage permet d'enregistrer la contrainte en flexion de la lame 14 grâce à un montage en demi-pont de Wheatstone et de compenser les gradients thermiques éventuels. L'étalonnage de la sonde est assuré en l'introduisant dans une série de tubes-étalons.

On comprend d'après ce qui précède que, pour obtenir une mesure exacte et précise, la lame flexible 10 doit présenter une très bonne symétrie afin que les points de contact des billes 18 et 20 avec la face interne 4 soient sur un même diamètre du tube et donc dans le même plan transversal. Il faut donc que les deux branches du V soient identiques et symétriques l'une de l'autre par rapport à un plan perpendiculaire au plan de la figure et contenant l'axe du tube 2. D'autre part, la lame 10 doit être symétrique par rapport au plan de la figure afin que les points de contact des billes 18 et 20 avec le tube se trouvent bien suivant un diamètre.

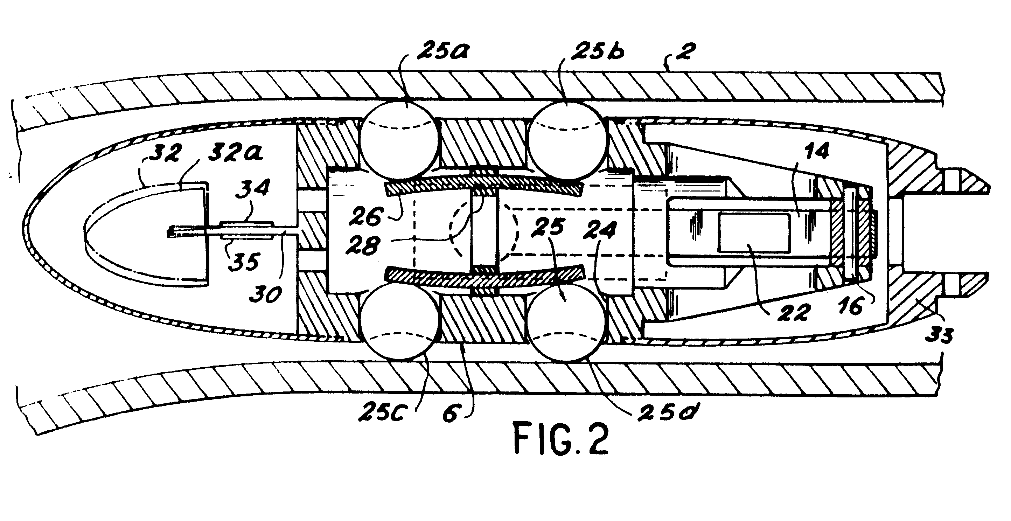

Cependant, même si les conditions ci-dessus sont respectées en ce qui concerne la lame flexible 10, on n'obtient une mesure correcte que si le corps de sonde 6 est parfaitement aligné par rapport à l'axe du tube. Pour cela, on utilise le dispositif illustré à la figure 2. On a prévu à l'intérieur du corps de sonde 6, qui a sensiblement la forme d'un ovoïde creux, quatre logements 24 dans lesquels sont disposées des billes telles que 25. Un premier groupe de deux billes 25a et 25b sont appliquées sur la génératrice du tube 2 correspondant à la partie supérieure de la figure. Les billes 25a et 25b sont sollicitées vers l'extérieur par une lame flexible 26 encastrée en son milieu sur une pièce 28 solidaire du corps de sonde 6. Un autre groupe de deux billes 25c et 25d identique au premier est monté de telle sorte que les billes 25c et 25d soient appliquées sur la génératrice du tube 2 opposée à celle sur laquelle sont appliquées les deux premières billes 25a et 25b. On comprend que ce dispositif assure le centrage du corps de sonde 6 à l'intérieur du tube sous réserve que les conditions suivantes soient respectées:

- les points de contact des billes 25a et 25b d'une part, 25c et 25d d'autre part sur le tube doivent se trouver exactement suivant une génératrice de celui-ci,

- la génératrice du tube en contact avec les billes 25a et 25b doit être opposée à la génératrice en contact avec les deux autres billes 25c et 25d,

- l'ensemble constitué par les deux billes de l'un des groupes doit être symétrique par rapport au plan transversal du tube 2 qui contient le dispositif de fixation 28 de la lame flexible 26 sur la pièce 6, et

- les deux groupes de deux billes doivent se trouver au même niveau le long de l'axe du tube.

Lorsque toutes les conditions ci-dessus sont remplies, tant en ce qui concerne les moyens de mesure du diamètre du tube que les moyens de centrage de la sonde à l'intérieur de celui-ci, on est sûr de mesurer un diamètre et rien d'autre.

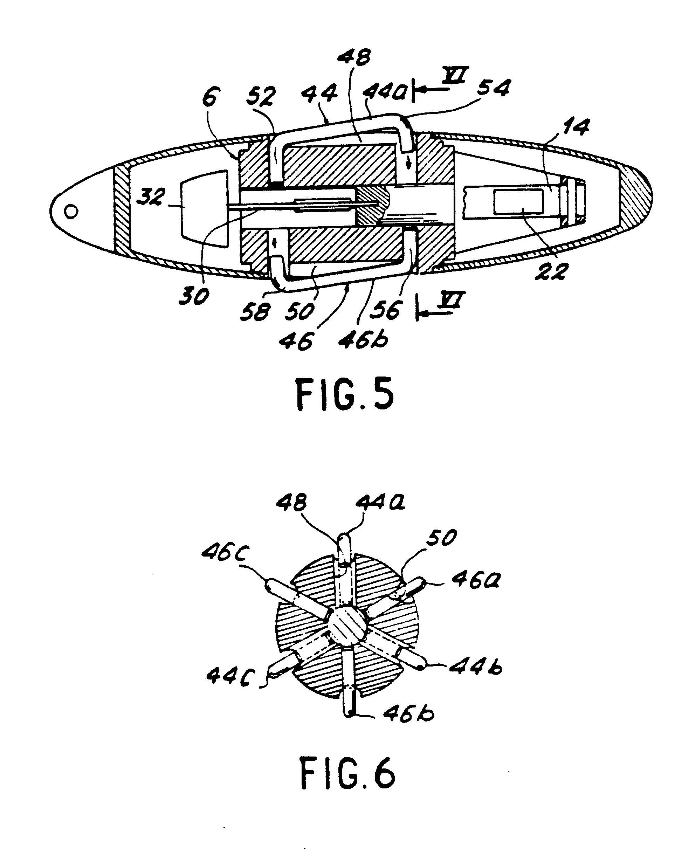

Les figures 5 et 6 illustrent un mode de réalisation particulier dans lequel le centrage n'est pas assuré par des billes, mais par des fils élastiques. On voit sur ces figures que le dispositif de centrage se compose d'un premier groupe de trois centreurs 44 (repérés de 44a à 44c sur la figure 6) et d'un deuxième groupe de trois centreurs 46 (repérés de 46a à 46c sur la figure 6). Chaque centreur du premier groupe (par exemple 44a, figure 5) est constitué par un fil élastique placé dans un logement 48 pratiqué suivant une génératrice du corps de sonde. Il en est de même pour les centreurs 46 du deuxième groupe placés dans des logements 50 (par exemple 46b, figure 6). On voit sur la figure 6 que les logements 48 des centreurs du premier groupe sont decalés de 120° les uns par rapport aux autres, de même que les logements 50 des centreurs 46, les deux ensembles de logements étant décalés de 60° l'un par rapport à l'autre.

On voit encore sur la figure 5 que chaque centreur 44 du premier groupe a une première extrémité 52 fixée au corps de sonde 6 tandis que son autre extrémité 54 est libre et peut venir en contact avec la paroi interne du tube. De même, chaque centreur 46 du deuxième groupe a une première extrémité 56 fixée au corps de sonde 6 tandis que son autre extrémité 58 est libre et peut venir en contact avec la paroi interne du tube. Les points de contact des extrémités 54 des centreurs 44 avec la paroi interne du tube sont dans un même plan transversal de celui-ci; il en est de même pour les extrémités 58 des centreurs 46, mais dans un plan transversal différent du premier. Dans le cas particulier décrit ici, les extrémités fixes des centreurs d'un groupe se trouvent au même niveau, le long du corps de sonde, que les extrémité libres des centreurs de l'autre groupe. Comme, dans le mode de réalisation de la figure 5, l'avant de la sonde se trouve vers la droite de la figure, les centreurs 44 du premier groupe centrent l'avant de la sonde et les centreurs 46 du deuxième groupe centrent l'arrière de la sonde cette dernière est donc parfaitement centrée et alignée avec l'axe du tube. Quant aux fils constituant les centreurs, ils peuvent être réalisés en tout matériau convenable, par exemple de la corde à piano.

Cependant, il est encore nécessaire de savoir dans quel plan se situe le diamètre mesuré et pour cela de connaître l'orientation angulaire de la sonde par rapport à l'horizontale et à la verticale. C'est pourquoi on a prévu à l'extrémité avant du corps de sonde 6, c'est-à-dire à son extrémité opposée à celle sur laquelle est fixé l'axe 16 de la lame 10, une autre lame flexible 30 dont une extrémité est encastrée dans le corps de sonde 6 tandis que l'autre extrémité, qui est libre, porte une masselotte 32 qui, dans l'exemple représenté ici, est de forme ogivale. Lorsque le plan de la lame flexible 30 coïncide avec un plan horizontal, ce qui est le cas de la figure 2, la masselotte 32 sollicite l'extrémité correspondante de cette lame vers le bas, ce qui l'amène dans la position 32a représentée sur la figure 2 en traits pleins, tandis que la position normale est représentée en traits mixtes. Deux jauges de contrainte 34 et 35 placées de part et d'autre de la lame 30 permettent de connaître la flexion de celle-ci. On comprend que, lorsque le plan de la lame est horizontal, la flexion est maximale, tandis que, lorsque le plan de la lame 30 est vertical, la flexion de la lame passe par un minimum. Un étalonnage préalable permet de connaître la flexion de la lame 30, donc la position angulaire de la sonde à l'intérieur du tube 2, et l'on sait dans quel plan se trouve le diamètre mesuré. On voit encore sur les figures 1 et 2 que la lame flexible 10 servant à mesurer le diamètre et la lame flexible 30 servant à mesurer la position angulaire de la sonde se trouvent dans des plans perpendiculaires.

Avantageusement, on peut prévoir, à l'avant de la masselotte 32, un nez protecteur 31 relié au corps de sonde 6 (figure 1): on assure ainsi une protection de la masselotte et de la lame 30.

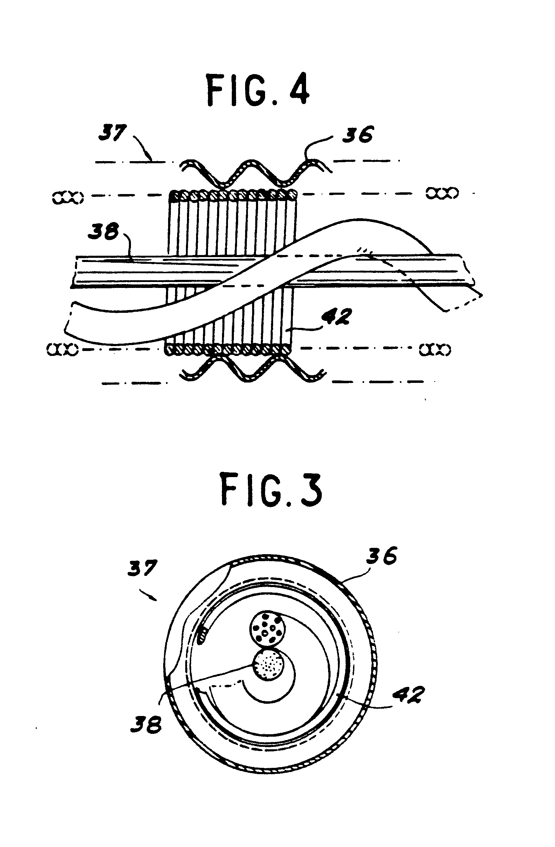

Un dernier aspect de l'invention concerne les moyens d'introduction de la sonde dans le tube, afin de connaître son positionnement précis, c'est-à-dire l'emplacement exact du point de mesure à partir de l'extrémité du tube. Notamment lors des contrôles en vue de mesures de fluage à long terme, il est nécessaire de recommencer les mesures de diamètre dans une même section droite du tube à des dates très espacées et à des températures variables de l'installation. Dans ce but, la sonde est introduite dans le tube à l'aide d'un dispositif particulier représenté aux figures 3 et 4. On voit sur ces figures que le dispositif d'introduction 37 se compose d'abord d'une gaine externe 36 ayant la forme d'un tube ondulé rigide. A l'intérieur de cette gaine 36 et sensiblement suivant son axe est disposé un câble tressé 38. Enfin, à l'intérieur de la gaine 36, entre celle-ci et le câble tressé 38, se trouve une gaine telle que 42 qui est une gaine à spires positives comme cela apparaît mieux sur la figure 4. La gaine 42 sert au passage des fils reliant les jauges de contrainte de la sonde aux appareils de mesure et des fils de thermocouples servant à connaitre la température à l'endroit de la mesure.

Le dispositif 37 a l'une ses extrémités reliée à l'ogive arrière 33 par un double cardan non représenté, et il n'est le siège d'aucun allongement ni raccourcissement, ni d'aucune d'origine mécanique, pour les raisons suivantes: la gaine ondulée, du fait de ses ondulations annulaires, ne peut pas subir de torsion; la gaine à spires jointives 42 ne peut subir de contractions mécaniques du fait que les spires sont jointives; enfin, le câble tressé 38 ne subit pas d'élongation mécanique. Comme tous ces éléments sont soudés les uns aux autres à chacune de leurs extrémités, il ne peut y avoir de déformation du dispositif d'introduction 37. Comme on choisit de préférence le matériau constitutif des différents éléments de ce dispositif d'introduction de même nature que le matériau constituant le tube à contrôler 2, il n'y a plus de problème de dilatation thermique. Il suffit d'introduire la sonde dans le tube à l'aide de ce dispositif et de repérer la longueur introduite depuis l'extrémité du tube.

A titre d'essai, on a réalisé une sonde conforme à l'invention permettant de contrôler des tubes ayant un diamètre intérieur compris entre 18 et 21 mm. Avec une sonde de longueur 90 mm pour un diamètre de 17 mm, on a pu obtenir une sensibilité et une précision de mesure de l'ordre de 1 micron, tandis que la longueur d'introduction de la sonde suivant l'axe du tube était mesurée avec une précision de plus ou moins 1 mm/10 m. L'orientation du diamètre mesuré a pu être déterminée à 2 minutes d'arc près. Le rayon de courbure minimal des tubes permettant le passage de la sonde était de 90 mm.

On voit donc que la sonde objet de l'invention présente des avantages particulièrement intéressants puisqu'elle permet des mesures précises du diamètre intérieur et de l'ovalisation des tubes, même dans le cas de tubes coudés de grande longueur. Elle trouve des applications dans de nombreux domaines, d'abord dans l'industrie nucléaire et thermo-électrique (contrôle des tubes de générateurs de vapeur) mais aussi d'une manière générale dans tous les domaines où l'on a besoin de faire des mesures précises de diamètre ou d'ovalisation à l'intérieur de tubes non parfaitement circulaires, courbes et de grandes longueurs.

## Revendications

1. Sonde pour la mesure du diamètre interne d'un tube (2), comprenant:

- des moyens de centrage de la sonde à l'intérieur du tube (2), des moyens pour mesurer le diamètre intérieur du tube (2), et
- des moyens pour déterminer la position de la sonde à l'intérieur du tube (2), caractérisée en ce que lesdits moyens de centrage comprennent un corps de sonde (6) et en ce que lesdits moyens pour déterminer la position de la sonde à l'intérieur du tube (2) servent à déterminer la position angulaire par rapport à l'horizontale de celle-ci et comprennent:

- une lame flexible (30) dont une extrémité est encastrée dans le corps de sonde (6),
- une masselotte (32) fixée à l'autre extrémité de ladite lame (30), qui est libre, et
- au moins un capteur (34, 35) à jauge de contrainte fixé sur ladite lame flexible (30).

2. Sonde selon la revendication 1, caractérisée en ce que le corps de sonde est de forme sensiblement ovoïde de révolution, l'intérierur de ce corps de sonde (6) étant creux, et en ce que lesdits moyens de centrage comprennent en outre:

- un premier groupe de deux billes (25a, 25b) placées dans des logements (24) ménagés dans la paroi du corps de sonde (6) et sollicitées vers l'extérieur par une lame flexible (26), les deux billes étant placées suivant une génératrice du corps de sonde (6), et
- un deuxième groupe de deux billes (25c, 25d) identique au premier, disposé suivant la génératrice opposée du corps de sonde et au même niveau que le premier groupe.

3. Sonde selon la revendication 1, caractérisée en ce que le corps de sonde est de forme sensiblement ovoïde de révolution, l'intérierur de ce corps de sonde (6) étant creux, et en ce que lesdits moyens de centrage comprennent en outre:

- un premier groupe de trois centreurs (44), formés de fils élastiques placés dans des logements (48) ménagés dans la paroi du corps de sonde (6) et disposés suivant trois génératrices de celui-ci décalées de 120° les unes par rapport aux autres, chacun desdits centreurs (44) ayant une première extrémité (52) fixée au corps de sonde (6) et une deuxième extrémité (54) libre pouvant venir en contact avec la paroi interne du tube (2), les points de contact des trois centreurs (44) avec la paroi interne du tube (2) étant situés dans un même plan tranversal de celui-ci, et

- un deuxième groupe de trois centreurs (46) formés de fils élastiques placés dans des logements (50) ménagés dans le corps de sonde (6) et disposés suivant trois génératrices de celui-ci décalées de 120° les unes par rapport aux autres, chacun desdits centreurs (46) ayant une première extrémité (56) fixée au corps de sonde (6) et une deuxième extrémité (58) libre et pouvant venir en contact avec la paroi interne du tube (2), les points de contact des trois centreurs (46) du deuxième groupe avec la paroi interne du tube (2) étant situés dans un même plan transversal de celui-ci différent du plan transversal contenant les points de contact des centreurs (44) du premier groupe avec la paroi interne du tube (2).

4. Sonde selon l'une quelconque des revendications 1 à 3, caractérisée en ce que lesdits moyens permettant de mesurer le diamètre intérieur du tube (2) comprennent:

- une lame flexible (10) rendue solidaire du corps de sonde et ayant sensiblement la forme d'un V dont les deux branches (12, 14) sont symétriques par rapport à un plan contenant l'axe du tube (2) lorsque la sonde se trouve à l'intérieur de celui-ci,
- une bille (18, 20) fixée à l'extrémité de chacune des branches (12) de manière à être appliquée contre la paroi interne du tube (2) du fait de l'élasticité de ladite lame flexible (10), et
- au moins une jauge de contrainte (21) placée sur l'une (14) des branches de la lame (10).

5. Sonde selon l'une quelconque des revendications 1 à 4, caractérisée en ce qu'elle comporte une ogive de protection (31) reliée au corps de sonde (6), l'ensemble constitué par la masselotte (32) et la lame flexible (30) se trouvant à l'intérieur de l'espace délimité par l'ogive (31).

6. Dispositif pour l'introduction de la sonde selon l'une quelconque des revendications 1 à 5 à l'intérieur du tube (2), caractérisé en ce qu'il comprend une gaine rigide (36) ayant la forme d'un tube ondulé et contenant:

- un câble tressé (38) disposé à l'intérieur de ladite gaine (36) sensiblement suivant son axe, et
- une gaine à spires jointives (42) disposée à l'intérieur de ladite gaine ondulée (36), colinéaire à la gaine ondulée (36) et au câble tressé (38).

7. Dispositif selon la revendication 6, caractérisé en ce qu'il comporte en outre un double cardan permettant de relier l'ensemble constitué par la gaine ondulée (36), le câble tressé (38) et la gaine à spires jointives (42) au corps de sonde (6).

**Patentansprüche**

1. Sonde zum Messen des Innendurchmessers eines Rohrs (2), mit
einer Einrichtung zum Zentrieren der Sonde im Inneren des Rohrs (2),
einer Einrichtung zum Messen des Innendurchmessers des Rohrs (2) und
einer Einrichtung zum Bestimmen der Position der Sonde im Inneren des Rohrs (2),
dadurch gekennzeichnet, daß die Zentriereinrichtung einen Sondenkörper (6) aufweist und daß die Einrichtung zum Bestimmen der Position der Sonde im Inneren des Rohrs (2) der Bestimmung der Winkelposition in bezug auf die Horizontale dient und
eine eine mit einem Ende im Sondenkörper (6) festgelegte flexible Zunge (30),
ein am anderen, freien Ende der Zunge (30) befestigtes Gewicht (32) und
wenigstens einen an der flexiblen Zunge (30) befestigten Dehnungsmeßstreifen (34, 35) aufweist.

2. Sonde nach Anspruch 1, dadurch gekennzeichnet, daß der Sondenkörper ein im wesentlichen ovaler Rotationskörper ist, daß der Innenraum des Sondenkörpers (6) hohl ist, und daß die Zentriereinrichtung ferner
eine erste Gruppe von zwei in in der Wandung des Sonden-Körpers (6) ausgebildeten Sitzen (24) angeordneten Kugeln (25a, 25b), welche durch eine flexible Zunge (26) auswärts belastet und entlang einer Mantellinie des Sondenkörpers (6) ausgerichtet sind,
und eine mit der ersten identische zweite Gruppe von zwei Kugeln (25c, 25d) aufweist, welche in gleicher Höhe mit der ersten Gruppe entlang der gegenüberliegenden Mantellinie des Sondenkörpers ausgerichtet sind.

3. Sonde nach Anspruch 1, dadurch gekennzeichnet, daß der Sondenkörper ein im wesentlichen ovaler Rotationskörper ist, daß der Innenraum des Sondenkörpers (6) hohl ist, und daß die Zentriereinrichtung ferner
eine erste Gruppe von drei Zentriergliedern (44) aufweist, welche aus in der Wandung des Sondenkörpers (6) ausgebildeten Aufnahmen (48) angeordneten elastischen Drahtstücken gebildet und entlang drei zueinander um 120° versetzten Mantellinien des Sondenkörpers ausgerichtet sind, wobei jedes Zentrierglied (44) ein am Sondenkörper (6) befestigtes erstes Ende (52) und ein an der Innenwandung des Rohrs (2) in Anlage bringbares zweites, freies Ende (54) hat, und wobei die Berührungspunkte der drei Zentrierglieder (44) mit der Innenwand des Rohrs (2) in einer gemeinsamen Querebene desselben liegen, sowie
eine zweite Gruppe von drei Zentriergliedern (46) aus in in der Wandung des Sondenkörpers (6) ausgebildeten Aufnahmen (50) angeordneten elastischen Drahtstücken, welche entlang drei um 120° zueinander versetzten Mantellinien des Sondenkörpers ausgerichtet sind und jeweils ein am Sondenkörper (6) befestigtes erstes Ende (56) und ein an der Innenwandung des Rohrs (2) in Anlage bringbares zweites, freies Ende (58) haben, wobei die Berührungspunkte der drei Zentrierglieder (46) der zweiten Gruppe mit der Innenwand des Rohrs (2) in einer gemeinsamen Querebene desselben liegen, welche von der die Berührungspunkte der Zentrierglieder (44) der ersten Gruppe mit der Innenwand des Rohrs (2) enthaltenden Querebene desselben verschieden ist.

4. Sonde nach einem der Ansprüche 1 bis 3, dadurch gekennzeichnet, daß die Einrichtung zum Messen des Innendurchmessers des Rohrs (2) eine fest mit dem Sondenkörper verbundene und im wesentlichen etwa V-förmige, elastische Zunge (10), deren beide Arme (12, 14) in bezug auf eine die Achse des Rohrs (2) enthaltende Ebene symmetrisch sind, wenn sich die Sonde in dem Rohr befindet,

jeweils eine an den Enden der beiden Arme (12, 14) befestigte Kugel (18, 20), welche durch die Elastizität der flexiblen Zunge (10) in Anlage an der Innenwand des Rohrs (2) gehalten ist, und wenigstens einen an einem Arm (14) der Zunge (10) angebrachten Dehnungsmeßstreifen (21) aufweist.

5. Sonde nach einem der Ansprüche 1 bis 4, dadurch gekennzeichnet, daß sie eine mit dem Sondenkörper (6) verbundene ogivale Schutzhaube (31) aufweist, und daß sich die aus dem Gewicht (32) und der flexiblen Zunge (30) bestehende Baugruppe im Inneren des durch die Schutzhaube (31) umgrenzten Raums befindet.

6. Vorrichtung zum Einführen der Sonde nach einem der Ansprüche 1 bis 5 in das Innere des Rohrs (2), dadurch gekennzeichnet, daß sie eine starre Hülle (36) in Form eines gewellten Rohrs aufweist, welche ein im Inneren der Hülle (36) im wesentlichen entlang deren Achse angeordnetes, geflochtenes Kabel und eine Hülle aus aneinanderliegenden Windungen (42) aufweist, welche im Inneren der gewellten Hülle (36) kolinear mit der gewellten Hülle (36) und dem geflochtenen Kabel (38) angeordnet ist.

7. Vorrichtung nach Anspruch 6, dadurch gekennzeichnet, daß sie ferner ein doppeltes Kreuzgelenk aufweist, mittels dessen die aus der gewellten Hülle (36), dem geflochtenen Kabel (38) und der Hülle aus aneinanderliegenden Windungen (42) gebildete Baugruppe mit dem Sondenkörper (6) verbindbar ist.

## Claims

1. Probe for measuring the internal diameter of a tube (2), comprising:

- means for centring the probe within the tube (2),
- means for measuring the internal diameter of the tube (2), and
- means for determining the position of the probe within the tube (2),

characterized in that the said centring means comprise a probe body (6), and in that the said means for determining the position of the probe within the tube (2) serve to determine the angular position of the probe in relation to the horizontal and comprise:

- a flexible plate (30), one end of which is embedded in the probe body (6),
- a head (32) fixed to the other end of the said plate (30), which is free, and
- at least one sensor (34, 35) incorporating a strain gauge, fixed on the said flexible plate (30).

2. Probe according to Claim 1, characterized in that the probe body is of a shape which is substantially an ovoid of revolution, the interior of this probe body (6) being hollow, and in that the said centring means further comprise:

- a first group of two balls (25a, 25b) situated with in recesses (24) formed in the wall of the probe body (6) and urged towards the exterior by a flexible plate (26), the two balls being situated along a generatrix of the probe body (6), and
- a second group of two balls (25c, 25d) which is identical to the first, disposed along the opposite generatrix of the probe body and at the same level as the first group.

3. Probe according to Claim 1, characterized in that the probe body is of a shape which is substantially an ovoid of revolution, the interior of this probe body (6) being hollow, and in that the said centring means further comprise:

- a first group of three centring members (44), formed of resilient wires situated within recesses (48) formed in the wall of the probe body (6) and disposed along three generatrices of the latter which are offset by 120° C in relation to one another, each one of the said centring members (44) having a first end (52) fixed to the probe body (6) and a second end (54) which is free, being able to come into contact with the internal wall of the tube (2), the points of contact of the three centring members (44) with the internal wall of the tube (2) being situated in a same transverse plane of the latter, and
- a second group of three centring members (46) formed of resilient wires situated within recesses (50) formed in the probe body (6) and disposed along three generatrices of the latter which are offset by 120° in relation to one another, each one of the said centring members (46) having a first end (56) fixed to the probe body (6) and a second end (58) which is free and which can come into contact with the internal wall of the tube (2), the points of contact of the three centring members (46) of the second group with the internal wall of the tube (2) being situated in a same transverse plane of the latter which is different from the transverse plane containing the points of contact of the centring members (44) of the first group with the internal wall of the tube (2).

4. Probe according to any one of Claims 1 to 3, characterized in that the said means permitting the measurement of the internal diameter of the tube (2) comprise:

- a flexible plate (10) formed into a solid unit with the probe body and having substantially the shape of a V, the two branches (12, 14) of which are symmetrical in relation to a plane containing the axis of the tube (2) when the probe is situated within the latter,
- a ball (18, 20) fixed at the end of each one of the branches (12) in such a manner as to be applied against the internal wall of the tube (2) on account of the resilience of the said flexible plate (10), and
- at least one strain gauge (21) situated on one (14) of the branches of the plate (10).

5. Probe according to any one of Claims 1 to 4, characterized in that it comprises a protective ogive (31) connected to the probe body (6), the assembly consisting of the head (32) and the flexible plate (30) being situated within the space delimited by the ogive (31).

6. Device for the introduction of the probe according to any one of Claims 1 to 5 within the tube (2), characterized in that it comprises a rigid sheath (36) having the shape of a corrugated tube and containing:

- a braided cable (38) disposed within the said sheath (36) substantially along its axis, and
- a sheath with contiguous turns (42) which is disposed within the said corrugated sheath (36), colinear with the corrugated sheath (36) and with the braided cable (38).

7. Device according to Claim 6, characterized in that it further comprises a double cardan permitting the connection of the assembly consisting of the corrugated sheath (36), the braided cable (38) and the sheath with contiguous turns (42) to the probe body (6).

**FIG.1**

EP 0 140 780 B1

FIG.2

# FIG. 4

# FIG. 3

FIG.5

FIG.6